# EUROPÄISCHE PATENTANMELDUNG

(11) **EP 4 428 419 A1**
(43) Veröffentlichungstag der Anmeldung: **11.09.2024**
(21) Anmeldenummer: 24162568.0
(22) Anmeldetag: 11.03.2024
(51) Int. Cl.: F16K 35/06, F16K 35/10

(54) **VERSCHLUSSKAPPE FÜR SCHIEBER UND LÖSEWERKZEUG**

(30) Priorität: 10.03.2023 DE 102023106042
(71) Anmelder: Invest121 GmbH, 45879 Gelsenkirchen (DE)
(72) Erfinder: Seuthe, Adrian, 58300 Wetter (DE); Rottländer, Hendrik, 45128 Essen (DE)
(74) Vertreter: Schneiders & Behrendt Bochum

(57) **Zusammenfassung**

Die Erfindung betrifft eine Verschlusskappe zur Anbringung an einem Schieber zur Sicherung des Schiebers vor Manipulationen und ein Lösewerkzeug zur Entfernung der Verschlusskappe (1) von dem Schieber, wobei die Verschlusskappe (1) im Wesentlichen hohlzylinderförmig ausgestaltet ist, eine obere Öffnung (4) und eine untere Öffnung (5) aufweist sowie eine zwischen der oberen Öffnung (4) und der unteren Öffnung (5) liegende Wandung mit einer Innenseite und einer Außenseite und wobei die Verschlusskappe (1) in einen oberen Abschnitt (2) und einen unteren Abschnitt (3) unterteilt ist und der obere Abschnitt (2) die obere Öffnung (4) und der untere Abschnitt (3) die untere Öffnung (5) umfasst, wobei vom Rand der unteren Öffnung (5) Rasthaken (10) in das Innere der unteren Öffnung (5) ragen; und die Wandung der Verschlusskappe (1) im unteren Abschnitt (3) durch eine Vielzahl von Einschnitten in Segmente (7) unterteilt ist, wobei die Einschnitte (6) die Wandung und die Rasthaken (10) vollständig durchtrennen; und die Verschlusskappe (1) zumindest für jedes Segment (7), an dem Rasthaken (10) vorgesehen sind, einen Führungskanal (9) zur Führung des Lösewerkzeugs umfasst; und der Führungskanal (9) im unteren Abschnitt (3) der Verschlusskappe (1) nach innen hin offen als Führungsschiene (9b) vorgesehen ist und eine Verdrehung von 70° bis 110° durchführt.

## Beschreibung

Die Erfindung betrifft eine Verschlusskappe zur Anbringung an einem Schieber sowie ein entsprechendes Lösewerkzeug zum Lösen der Verschlusskappe, wobei die Verschlusskappe zur Verhinderung von Manipulationen des Schiebers vorgesehen ist.

Bei verschiedenen Leitungen, wie beispielsweise bei Wasser- und Gasleitungen, wird der Durchfluss durch sogenannte Schieber oder Absperrschieber geregelt. Diese Schieber werden häufig nicht gegen unberechtigte Betätigung gesichert und können somit leicht auch von unberechtigten Personen betätigt werden.

Es ist Aufgabe der Erfindung, eine Vorrichtung zur Verfügung zu stellen, die einfach an einem Schieber zu montieren ist und die eine unberechtigte Betätigung des Schiebers verhindert. Die Vorrichtung soll gleichzeitig von einer berechtigten Person einfach zu demontieren sein, um den Schieber wieder uneingeschränkt bedienen zu können.

Gelöst wird diese Aufgabe durch eine Erfindung mit den Merkmalen der Ansprüche 1 und 8. Vorteilhafte Ausgestaltungen sind jeweils Gegenstand der abhängigen Ansprüche. Es ist darauf hinzuweisen, dass die in den Ansprüchen einzeln aufgeführten Merkmale auch in beliebiger und technologisch sinnvoller Weise miteinander kombiniert werden können und somit weitere Ausgestaltungen der Erfindung aufzeigen.

Eine erfindungsgemäße Verschlusskappe für einen Schieber ist im Wesentlichen hohlzylinderförmig ausgestaltet mit einer oberen Öffnung und mit einer unteren Öffnung sowie einer zwischen der oberen Öffnung und der unteren Öffnung liegenden Wandung mit einer Innenseite und einer Außenseite. Der Hohlzylinder kann sich zur oberen Öffnung hin verjüngen.

Vorzugsweise weist die obere Öffnung einen geringeren Innendurchmesser auf als die untere Öffnung, wobei die Innendurchmesser der oberen und unteren Öffnung im Wesentlichen durch die Außendurchmesser des Schiebers an diesen Stellen bestimmt werden, auf den die Verschlusskappe montiert werden soll.

Die Verschlusskappe ist in einen oberen Abschnitt und einen unteren Abschnitt unterteilt. Der obere Abschnitt umfasst die obere Öffnung und der untere Abschnitt umfasst die untere Öffnung.

Vorzugsweise ist die Wandung im oberen Abschnitt der Verschlusskappe dicker vorgesehen als im unteren Abschnitt, wobei die konkrete Dicke der Wandung ebenso wie die konkreten Durchmesser der Öffnungen abhängig sind von den Abmessungen des jeweiligen Schiebers und der gewünschten Stabilität der Verschlusskappe.

Vorzugsweise ist die Verschlusskappe innen rotationssymmetrisch als Pendant zur äußeren Geometrie des entsprechenden Schiebers vorgesehen, damit kein Drehmoment von der montierten Verschlusskappe auf den Schieber übertragbar ist.

Im unteren Abschnitt ist die Wandung der Verschlusskappe durch eine Vielzahl von Einschnitten in Segmente unterteilt, wobei die Einschnitte vorzugsweise parallel zur Längsachse der Verschlusskappe verlaufen und die Wandung und vorhandene Rasthaken vollständig durchtrennen. Durch die Einschnitte wird der untere Abschnitt der Verschlusskappe in eine Vielzahl von Segmenten unterteilt, beispielsweise in 2 bis 32 Segmente, vorzugsweise in 4 bis 16 Segmente, noch bevorzugter in 4 bis 8 Segmente und insbesondere in 4 Segmente.

Vom Rand der unteren Öffnung ragen Rasthaken in das Innere der unteren Öffnung. Die Rasthaken können durchgängig entlang des Randes der unteren Öffnung vorgesehen sein, die Rasthaken können jedoch auch nur an einem Teil oder an einem Abschnitt des unteren Randes vorgesehen sein. Ebenso können die Rasthaken an jedem Segment oder nur an einigen Segmenten oder nur an einem Segment vorgesehen sein.

Die Rasthaken dienen der Fixierung der Verschlusskappe an dem Schieber, indem sie unterhalb des Schiebers einrasten. Entsprechend ist es bevorzugt, dass zumindest zwei Segmente über entsprechende Rasthaken verfügen, um einen sicheren Halt zu gewährleisten. Vorzugsweise sind dies gegenüberliegende Segmente.

Vorzugsweise sind die Rasthaken für eine einfache Montage zur Mittelachse der Verschlusskappe hin angeschrägt. So gleiten die Rasthaken bei der Montage einfach über den Schieber und drücken die entsprechenden Segmente nach außen bis die Rasthaken schließlich unterhalb des Schiebers in ihre ursprüngliche Position zurückkehren und dort einrasten.

Zum Lösen der Verschlusskappe vom Schieber müssen die Rasthaken vom Schieber gelöst werden. Dies geschieht erfindungsgemäß durch Aufspreizen der Segmente nach außen mit Hilfe eines Lösewerkzeugs.

Entsprechend betrifft die Erfindung auch ein Lösewerkzeug und ein Kit umfassend zumindest eine erfindungsgemäße Verschlusskappe und mindestens ein erfindungsgemäßes Lösewerkzeug.

Das Lösewerkzeug ist im Wesentlichen länglich und flach mit einem rechteckigen Querschnitt vorgesehen.

Das Lösewerkzeug ist vorzugweise einteilig vorgesehen mit einem ersten und einem zweiten Abschnitt, wobei sich der erste Abschnitt seitlich betrachtet vorzugsweise keilförmig zum zweiten Abschnitt hin verjüngt und der zweite Abschnitt über seine Länge vorzugsweise konstant in seinen Abmessungen bleibt. Von oben betrachtet verjüngt sich der erste Abschnitt vorzugsweise trapezförmig zum zweiten Abschnitt hin, wobei der zweite Abschnitt auch hier über seine Länge vorzugsweise konstant in seinen Abmessungen bleibt.

Der erste Abschnitt kann für eine verbesserte Handhabung einen Griff umfassen.

Vorzugsweise ist eine der beiden schmaleren Seiten abgerundet vorgesehen, noch bevorzugter sind eine der beiden schmaleren Seiten (Schmalseiten) und eine der beiden breiteren Seiten (Breitseiten) abgerundet vorgesehen und bilden im Querschnitt gesehen eine zusammenhängende Kurvenform aus. Sofern zwei Seiten entsprechend abgerundet vorgesehen sind, sind die beiden übrigen Seiten vorzugsweise gerade vorgesehen und bilden einen rechten Winkel.

Die abgerundeten Seiten erlauben eine einfachere Führung des Lösewerkzeugs insbesondere durch den verdrehten unteren Führungskanal, wohingegen die geraden Seiten eine stabilere Führung im unteren Führungskanal erlauben.

Um die Segmente erfindungsgemäß mit dem Lösewerkzeug aufspreizen zu können, umfasst die Verschlusskappe zumindest für jedes Segment, an dem Rasthaken vorgesehen sind, einen Führungskanal zur Führung des Lösewerkzeugs.

Der Führungskanal beginnt mit einer Öffnung zur Aufnahme des Lösewerkzeugs vorzugsweise im oberen Abschnitt der Verschlusskappe und setzt sich bis zu den Segmenten im unteren Abschnitt fort. Vorzugsweise endet der Führungskanal an der unteren Öffnung noch unterhalb der Rasthaken und durchtrennt diese gegebenenfalls.

Im oberen Abschnitt der Verschlusskappe ist der Führungskanal, nachfolgend auch als "oberer Führungskanal" bezeichnet, vorzugsweise innerhalb der Wandung vorgesehen, der Kanal ist in diesem Abschnitt also vorzugsweise von der Wandung umschlossen.

Der Führungskanal ist im oberen Abschnitt vorgesehen, das Lösewerkzeug so aufzunehmen und führen, dass die breiten Seiten des Lösewerkzeugs parallel zur Außenseite des Schiebers angeordnet sind. Die schmalen Seiten sind entsprechend senkrecht zur Außenseite des Schiebers angeordnet.

Im unteren Abschnitt der Verschlusskappe ist der Führungskanal, nachfolgend auch als "unterer Führungskanal" bezeichnet, nach innen hin offen als Führungsschiene vorgesehen und führt eine Verdrehung von 70° bis 110°, vorzugsweise von 80° bis 100° und insbesondere von 90° durch.

Entsprechend sind nach einer Verdrehung des Lösewerkzeugs im Führungskanal um 90° die breiten Seiten des Lösewerkzeugs senkrecht zur Außenseite des Schiebers angeordnet und die schmalen Seiten parallel zur Außenseite des Schiebers.

Der obere Führungskanal weist vorzugsweise eine Form, also einen Querschnitt und eine Verjüngung, auf, die der Form, also dem Querschnitt und der Verjüngung, des ersten Abschnitts des Lösewerkzeugs entspricht. Lösewerkzeug und oberer Führungskanal sind entsprechend vorzugsweise formschlüssig aufeinander abgestimmt.

Entsprechend erreicht das Lösewerkzeug beim Einführen in den oberen Führungskanal einen Formschluss zwischen zumindest einem Teil des ersten Abschnitts des Lösewerkzeugs und dem oberen Führungskanal.

Der Formschluss ist derart vorgesehen, dass vorzugsweise nur der zweite Abschnitt des Lösewerkzeugs in den unteren Führungskanal eindringt und der Verdrehung folgt. Der Führungskanal im unteren Abschnitt weist ein Profil auf, das vorzugsweise formschlüssig die flache Schmalseite des Lösewerkzeugs aufnimmt.

Unterer Führungskanal und Lösewerkzeug sind in ihren Dimensionen so abgestimmt, dass das zugehörige Segment der Verschlusskappe weit genug abgespreizt wird, um die Rasthaken zu lösen.

Sofern das Lösewerkzeug eine abgerundete schmale Seite aufweist, so ist die schmale abgerundete Seite des Lösewerkzeugs vorgesehen, nach der Verdrehung des Lösewerkzeugs um 90° im unteren Führungskanal, gegen die Außenwand des Schiebers zu drücken und so die Segmente nach außen zu spreizen und entsprechend die Rasthaken zu lösen.

Vorzugsweise umfasst ein Kit eine Anzahl Lösewerkzeuge, die zumindest der Gesamtzahl der Führungskanäle einer Verschlusskappe entspricht, was ein einfaches Lösen der Verschlusskappe durch das gleichzeitige Einführen eines Lösewerkzeugs in jeden Führungskanal und durch die simultane Abspreizung aller Rasthaken ermöglicht.

In einer Weiterbildung der Erfindung kann in der Verschlusskappe weiterhin mindestens ein Sensor angeordnet sein, der eine unberechtigte Manipulation an der angebrachten Verschlusskappe erfasst, wobei unter einer unberechtigten Manipulation insbesondere ein Entfernen der Verschlusskappe ohne entsprechendes Lösewerkzeug zu verstehen ist.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen. Die Erfindung ist jedoch nicht auf die gezeigte Ausführungsvariante beschränkt. Insbesondere umfasst die Erfindung, soweit es technisch sinnvoll ist, beliebige Kombinationen der technischen Merkmale, die in den Ansprüchen aufgeführt oder in der Beschreibung als erfindungsrelevant beschrieben sind.

Es zeigen:
- Fig. 1A: eine Seitenansicht der erfindungsgemäßen Verschlusskappe;
- Fig. 1B: einen Längsschnitt durch die erfindungsgemäße Verschlusskappe gemäß Fig. 1A;
- Fig. 2A: eine Ansicht von oben auf die erfindungsgemäße Verschlusskappe;
- Fig. 2B: die Ansicht der erfindungsgemäßen Verschlusskappe gemäß Fig. 2A mit kenntlichgemachten inneren Strukturen;
- Fig. 3A: eine Seitenansicht des erfindungsgemäßen Lösewerkzeugs;
- Fig. 3B: eine Aufsicht auf das erfindungsgemäße Lösewerkzeug gemäß Fig. 3A;
- Fig. 3C: einen Querschnitt durch das erfindungsgemäße Lösewerkzeug.

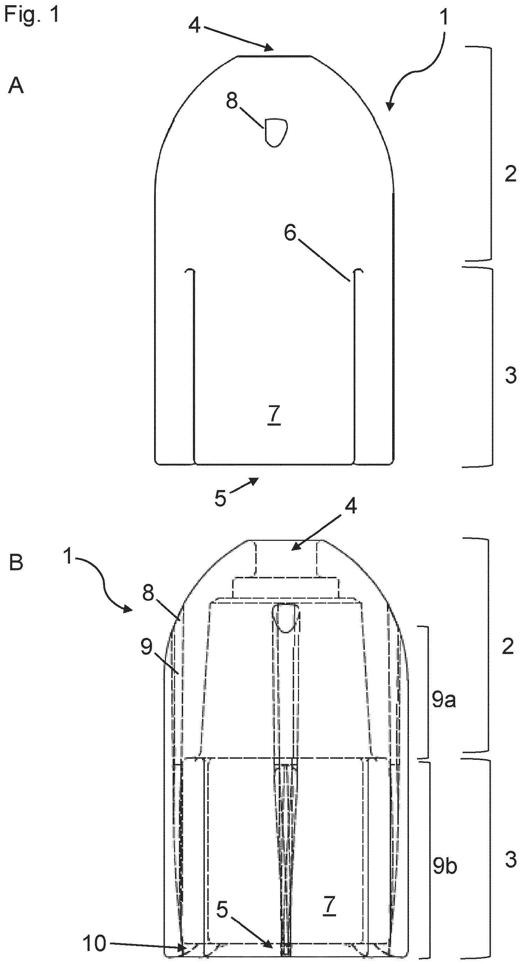

Figur 1A zeigt eine Seitenansicht der erfindungsgemäßen Verschlusskappe 1 mit einem oberen Abschnitt 2 und einem unteren Abschnitt 3 und einer oberen Öffnung 4 und einer unteren Öffnung 5. Der untere Abschnitt 3 ist durch vier Einschnitte 6 in insgesamt vier Segmente 7 unterteilt. Zu jedem Segment 7 mit Rasthaken führt ein Führungskanals (nicht dargestellt), wobei die Öffnung 8 des Führungskanals zur Aufnahme eines Lösewerkzeugs im oberen Abschnitt 2 angeordnet ist.

Figur 1B zeigt einen Längsschnitt durch die erfindungsgemäße Verschlusskappe 1 mit dem oberen Abschnitt 2 und dem unteren Abschnitt 3 und der oberen Öffnung 4 und der unteren Öffnung 5. Der untere Abschnitt 3 ist durch vier Einschnitte 6, die parallel zueinander und parallel zur Mittelachse der Verschlusskappe 1 verlaufen, in vier Segmente 7 unterteilt.

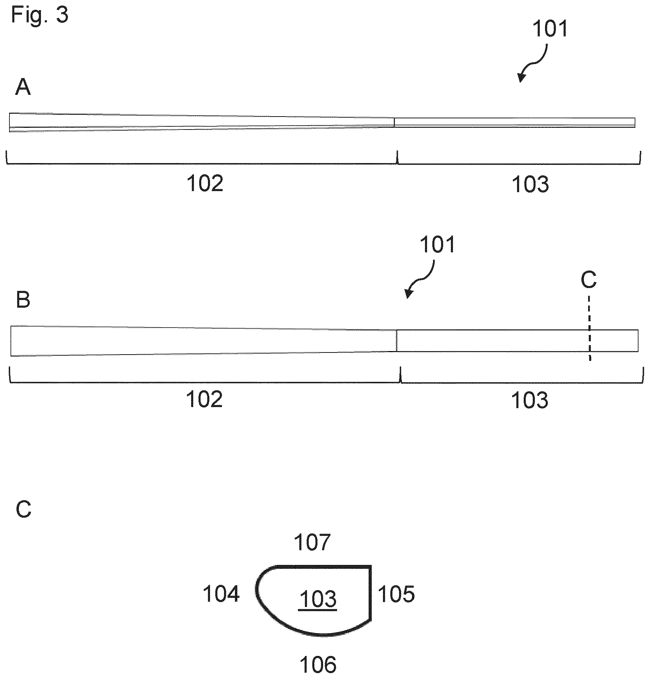

Die Öffnung 8 des Zuführkanals 9 ist im oberen Abschnitt 2 vorgesehen. Der obere Zuführkanal 9a verjüngt sich vorzugsweise im Verlauf, um einen Formschluss mit dem ersten Abschnitt des Lösewerkzeugs (siehe Figur 3) zu bilden. Der untere Zuführkanal 9b ist im unteren Abschnitt 3 vorgesehen und vollzieht im Verlauf eine Verdrehung um 90°. Der untere Zuführkanal 9b endet vorzugsweise unterhalb der Rasthaken 10. Die Rasthaken 10 sind am unteren Rand der unteren Öffnung 5 vorgesehen und ragen zumindest teilweise in die Öffnung 5 hinein. Vorzugsweise verlaufen die Rasthaken 10 entlang des unteren Randes und sind in jedem Segment 7 vorhanden. Entsprechend ist für jedes Segment 7 ein Zuführkanal 9 vorgesehen.

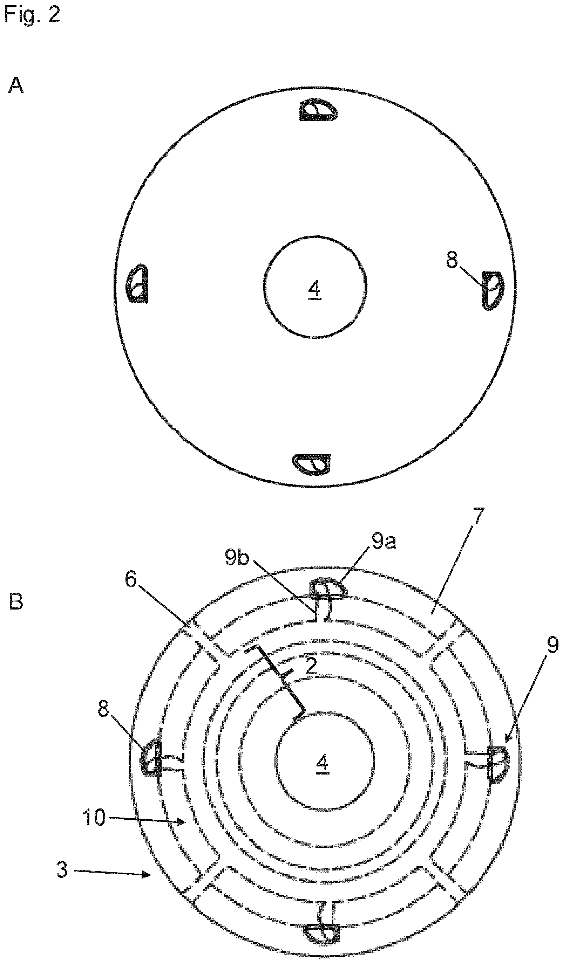

Figur 2A zeigt eine Aufsicht auf die Verschlusskappe 1 mit den vier Öffnungen 8 der Zuführkanäle und der oberen Öffnung 4.

Figur 2B zeigt die Aufsicht gemäß Figur 2A mit sichtbaren Innenstrukturen der erfindungsgemäßen Verschlusskappe 1 mit dem oberen Abschnitt 2 und dem unteren Abschnitt 3 und der oberen Öffnung 4. Der untere Abschnitt 3 ist durch vier Einschnitte 6, die parallel zueinander und parallel zur Mittelachse der Verschlusskappe 1 verlaufen, in vier Segmente 7 unterteilt.

Die Öffnung 8 des Zuführkanals 9 ist im oberen Abschnitt 2 vorgesehen. Der obere Zuführkanal 9a verjüngt sich vorzugsweise im Verlauf, um einen Formschluss mit dem Lösewerkzeug (siehe Figur 3) zu bilden. Der untere Zuführkanal 9b ist im unteren Abschnitt 3 vorgesehen und vollzieht im Verlauf eine Verdrehung um 90°. Der untere Zuführkanal 9b endet vorzugsweise unterhalb der Rasthaken 10. Die Rasthaken 10 sind am unteren Rand der unteren Öffnung (in dieser Darstellung nicht markiert) vorgesehen und ragen zumindest teilweise in die untere Öffnung hinein. Vorzugsweise verlaufen die Rasthaken 10 entlang des unteren Randes und sind in jedem Segment 7 vorhanden. Entsprechend ist für jedes Segment 7 ein Zuführkanal 9 vorgesehen.

Figur 3A zeigt eine Seitenansicht des erfindungsgemäßen Lösewerkzeugs 101 mit dem ersten Abschnitt 102 und dem zweiten Abschnitt 103. Der erste Abschnitt 102 verjüngt sich keilförmig zum zweiten Abschnitt 103 hin, wohingegen der zweite Abschnitt 103 über seine Länge vorzugsweise konstant in seinen Abmessungen bleibt.

Der erste Abschnitt 102 kann für eine verbesserte Handhabung einen Griff umfassen.

Vorzugsweise ist eine der beiden schmaleren Seiten abgerundet vorgesehen, noch bevorzugter sind eine der beiden schmaleren Seiten und eine der beiden breiteren Seiten abgerundet vorgesehen und bilden im Querschnitt gesehen eine zusammenhängende Kurvenform aus (siehe Figur 3C).

Figur 3B zeigt eine Aufsicht des erfindungsgemäßen Lösewerkzeugs 101 mit dem ersten Abschnitt 102 und dem zweiten Abschnitt 103. Der erste Abschnitt 102 verjüngt sich trapezförmig zum zweiten Abschnitt 103 hin, wohingegen der zweite Abschnitt 103 über seine Länge vorzugsweise konstant in seinen Abmessungen bleibt.

Der erste Abschnitt 102 kann für eine verbesserte Handhabung einen Griff umfassen.

Vorzugsweise ist eine der beiden schmaleren Seiten abgerundet vorgesehen, noch bevorzugter sind eine der beiden schmaleren Seiten und eine der beiden breiteren Seiten abgerundet vorgesehen und bilden im Querschnitt gesehen eine zusammenhängende Kurvenform aus (siehe Figur 3C).

Figur 3C zeigt einen Querschnitt durch das erfindungsgemäße Lösewerkzeug 101 in dem zweiten Abschnitt 103. Eine der beiden schmaleren Seiten 104 und eine der beiden breiteren Seiten 106 sind abgerundet vorgesehen und bilden im Querschnitt gesehen eine zusammenhängende Kurvenform aus. Die beiden übrigen Seiten 105, 107 sind gerade und bilden einen rechten Winkel.

### Bezugszeichenliste

- 1: Verschlusskappe
- 2: Oberer Abschnitt der Verschlusskappe
- 3: Unterer Abschnitt der Verschlusskappe
- 4: Obere Öffnung der Verschlusskappe
- 5: Untere Öffnung der Verschlusskappe
- 6: Einschnitt
- 7: Segment
- 8: Öffnung des Führungskanals
- 9: Führungskanal (9a: oberer Abschnitt; 9b: unterer Abschnitt)
- 10: Rasthaken
- 101: Lösewerkzeug
- 102: Erster Abschnitt des Lösewerkzeugs
- 103: Zweiter Abschnitt des Lösewerkzeugs
- 104: Erste Schmalseite (abgerundet)
- 105: Zweite Schmalseite
- 106: Erste Breitseite (abgerundet)
- 107: Zweite Breitseite

## Patentansprüche

1. Verschlusskappe zur Anbringung an einem Schieber zur Sicherung des Schiebers vor Manipulationen, wobei die Verschlusskappe (1) im Wesentlichen hohlzylinderförmig ausgestaltet ist, eine obere Öffnung (4) und eine untere Öffnung (5) aufweist sowie eine zwischen der oberen Öffnung (4) und der unteren Öffnung (5) liegende Wandung mit einer Innenseite und einer Außenseite und wobei die Verschlusskappe (1) in einen oberen Abschnitt (2) und einen unteren Abschnitt (3) unterteilt ist und der obere Abschnitt (2) die obere Öffnung (4) und der untere Abschnitt (3) die untere Öffnung (5) umfasst, **dadurch gekennzeichnet, dass**
- vom Rand der unteren Öffnung (5) Rasthaken (10) in das Innere der unteren Öffnung (5) ragen; und
- die Wandung der Verschlusskappe (1) im unteren Abschnitt (3) durch eine Vielzahl von Einschnitten (6) in Segmente (7) unterteilt ist, wobei die Einschnitte (6) die Wandung und die Rasthaken (10) vollständig durchtrennen; und
- die Verschlusskappe (1) zumindest für jedes Segment (7), an dem Rasthaken (10) vorgesehen sind, einen Führungskanal (9) zur Führung eines Lösewerkzeugs (101) umfasst; und
- der Führungskanal (9) im unteren Abschnitt (3) der Verschlusskappe (1) nach innen hin offen als Führungsschiene (9b) vorgesehen ist und eine Verdrehung von 70° bis 110° durchführt.

2. Verschlusskappe nach Anspruch 1, **dadurch gekennzeichnet, dass** die Wandung der Verschlusskappe (1) im unteren Abschnitt (3) durch eine Vielzahl von Einschnitten (6) in 2 bis 32 Segmente (7), vorzugsweise in 4 bis 16 Segmente (7), noch bevorzugter in 4 bis 8 Segmente (7) und insbesondere in 4 Segmente (7) unterteilt ist.

3. Verschlusskappe nach Anspruch 1 oder 2, **dadurch gekennzeichnet, dass** die Rasthaken (10) an jedem Segment (7) vorgesehen sein.

4. Verschlusskappe nach einem der vorherigen Ansprüche, **dadurch gekennzeichnet, dass** der Führungskanal (9) mit einer Öffnung (8) im oberen Abschnitt (2) der Verschlusskappe (1) beginnt und sich bis zu den Segmenten (7) im unteren Abschnitt (3) fortsetzt.

5. Verschlusskappe nach einem der vorherigen Ansprüche, **dadurch gekennzeichnet, dass** der untere Führungskanal (9b) eine Verdrehung von 80° bis 100° und insbesondere von 90° durchführt.

6. Verschlusskappe nach einem der vorherigen Ansprüche, **dadurch gekennzeichnet, dass** die Einschnitte (6) parallel zueinander und zur Längsachse der Verschlusskappe (1) verlaufen.

7. Verschlusskappe nach einem der vorherigen Ansprüche, **dadurch gekennzeichnet, dass** die Verschlusskappe (1) innen rotationssymmetrisch als Pendant zur äußeren Geometrie des entsprechenden Schiebers vorgesehen ist, damit kein Drehmoment von der Verschlusskappe (1) auf den Schieber übertragbar ist.

8. Kit umfassend mindestens eine Verschlusskappe gemäß einem der vorherigen Ansprüche und ein Lösewerkzeug (101), wobei das Lösewerkzeug zur Einbringung in den Führungskanal (9) geeignet ist.

9. Kit gemäß Anspruch 8 gemäß einem der vorherigen Ansprüche, **dadurch gekennzeichnet, dass** das Lösewerkzeug (101) und der Führungskanal (9) formschlüssig aufeinander abgestimmt sind.

10. Kit gemäß einem der Ansprüche 8 oder 9, **dadurch gekennzeichnet, dass** das Kit eine Anzahl Lösewerkzeuge (101) umfasst, die zumindest der Gesamtzahl der Führungskanäle (9) einer Verschlusskappe (1) entspricht.
